# NEUE EUROPÄISCHE PATENTSCHRIFT

(11) **EP 2 384 928 B2**
(45) Veröffentlichungstag und Bekanntmachung des Hinweises auf die Entscheidung über den Einspruch: **13.03.2019**
(45) Hinweis auf die Patenterteilung: 23.03.2016
(21) Anmeldenummer: 10004693.7
(22) Anmeldetag: 04.05.2010
(51) Int. Cl.: B60P 1/44

(54) **Ladebordwandsystem**
Loading platform
Hayon élévateur

(43) Veröffentlichungstag der Anmeldung: 09.11.2011
(73) Patentinhaber: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Glawe, Delfs, Moll

(56) Entgegenhaltungen:
- EP-A1- 0 808 747
- EP-A1- 0 980 786
- EP-A1- 1 006 018
- FR-A1- 2 173 861

## Beschreibung

Die Erfindung betrifft ein Ladebordwandsystem zur Befestigung an Fahrzeugen und/oder Fahrzeuganhängern und/ oder Sattelaufliegern, insbesondere Lastkraftfahrzeugen, umfassend zwei im wesentlichen parallel voneinander beabstandete, jeweils im wesentlichen parallelogrammförmige Tragwerke, wobei sowohl das erste als auch das zweite Tragwerk eine Hub- und Senkbewegung einer im wesentlichen plattenförmigen Ladebordwand ein Heben und Absenken einer Last aufgrund einer in das Tragwerk eingeleiteten, von je einem pro Tragwerk vorgesehenen Hubaktuator erzeugten Kraft ausführt, und ein pro Tragwerk vorgesehener Klappaktuator ein Verschwenken der Ladebordwand von der Horizontalen in die Vertikale und umgekehrt ausführt, wobei die vom Klappaktuator erzeugte Kraft in jeweils in dasselbe erste bzw. zweite Tragwerk eingeleitet wird, in das auch die vom Hubaktuator erzeugte Kraft eingeleitet wird, wobei die Krafteeinleitungspunkte sowohl des jeweiligen Hubaktuators als auch die des jeweiligen Klappaktuators in dasselbe erste bzw. zweite Tragwerk, in den durch die Drehpunkte A₁, B₁, C₁, sowie E₁, F₁ bzw. A₂, B₂, C₂ sowie E₂, F₂ gebildeten jeweiligen Ebenen liegen, in der der Hubaktuator und der Klappaktuator in bezug auf die von ihnen auf die bzw. in den jeweiligen Tragwerken ausgeübten Kräfte einwirken.

Ein Ladebordwandsystem zur Befestigung an Fahrzeugen und/oder Fahrzeuganhängern und/oder Sattelaufliegern, insbesondere Lastkraftfahrzeugen, umfassend zwei im wesentlichen parallel voneinander beabstandete, jeweils im wesentlichen parallelogrammförmige Tragwerke, wobei ein erstes Tragwerk eine Hub- und Senkbewegung einer im wesentlichen plattenförmigen Ladebordwand zum Heben und Absenken einer Last aufgrund einer in das Tragwerk eingeleiteten, von einem Hubaktuator erzeugten Kraft ausführt, und ein Klappaktuator ein Verschwenken der Ladebordwand von der Horizontalen in die Vertikale und umgekehrt ausführt, ähnlicher Art, das auf die gleiche Anmelderin zurückgeht, ist aus der EP-A-0 808 747 bekannt. Das bekannte Ladebordwandsystem ist im einschlägigen Markt sowohl im europäischen Raum als auch im außereuropäischen Raum etabliert und hat namhafte Hersteller von Ladebordwandsystemen in Europa veranlaßt, um die Erlaubnis zur entgeltlichen Benutzung des bekannten Ladebordwandsystems nachzusuchen. Das bekannte Ladebordwandsystem hat sich als konstruktiv und im Hinblick auf seine Funktionalität als führendes Modell bei den Ladebordwandsystemen etabliert, die lediglich zwei Aktuatoren aufweisen, nämlich einen Aktuator für die Ausführung einer Hub- und Senkbewegung einer Ladebordwand und einer Klappbewegung der Ladebordwand, um bspw. einen Laderaum eines Fahrzeugs abzuschließen bzw. zu verschließen bzw. zu öffnen, um danach mit der Ladebordwand eine Last von einem Untergrund auf die Höhe einer Ladefläche eines Fahrzeugs transportieren zu können bzw. von dieser Ebene der Ladefläche des Fahrzeugs wiederum auf einen Untergrund abzusenken, auf dem die Ladebordwand im abgesenkten Zustand ruht.

Das vorgenannte Ladebordwandsystem ist der Fachwelt außerordentlich gut bekannt und es sind viele Versuche seitens der Wettbewerber unternommen worden, unter Umgehung des patentrechtlich geschützten Gegenstandes Umgehungslösungen zu finden, was aber nach Kenntnis der Anmelderin bisher nicht gelungen ist.

Das vorgenannte Ladebordwandsystem mit lediglich zwei Aktuatoren ist einschränkungslos geeignet, selbst Lasten von 1.500 kg problemlos anzuheben und abzusenken, ohne daß es im erwartungs- und im bestimmungsgemäß rauhen Betrieb, dem derartige Ladebordwandsysteme im Transportbereich ausgesetzt werden, zu systembedingten Ausfällen gekommen ist.

Die Konstruktion des bekannten Ladebordwandsystems sieht vor, daß mit dem einen Tragwerk der Hubaktuator zum Anheben bzw. zum Absenken der Ladebordwand zusammenwirkt, d.h. in das im wesentlichen parallelogrammförmige Tragwerk integriert ist, wohingegen der Klappaktuator zum Verschwenken der Ladebordwand von der Horizontalen in die Vertikale und umgekehrt in das zweite andere Tragwerk integriert ist. Das hat zur Folge, daß beide Tragwerke trotz aller konstruktiv angestrebten Gleichheit in wesentlichen konstruktiven und funktionellen Teilbereichen unterschiedlich ausgebildet werden müssen, da die Kräfteeinleitung in das erste Tragwerk bei der Ausführung einer Hubfunktion der Ladebordwand mittels dem Hubaktuator eine andere ist als die Kräfteeinleitung mittels eines Klappaktuators zum Klappen der Ladebordwand von der Horizontalen in die Vertikale und umgekehrt in das dafür bestimmte zweite Tragwerk.

Ladebordwandsysteme dieser Art unterliegen einem extremen Kostendruck seitens der Abnehmer, so daß man herstellerseitig bestrebt ist, die Ladebordwandsysteme bei gleicher und möglichst sogar verbesserter Funktionalität gegenüber den im Stand der Technik bestehenden Ladebordwandsystemen dem Kostendruck zu entgehen und für die verschiedensten Anwendungen bzw. Einsatzerfordernisse ein Ladebordwandsystem nach Art eines universellen Baukastens bereitzustellen, das den an die Hersteller herangetragenen Erfordernissen gerecht wird, je nach Anwendung, wählen läßt, in welcher angebotenen Ausgestaltung er sein Ladebordwandsystem konfiguriert zu haben wünscht.

Aus der FR-A-2 173 861 ist ein Ladebordwandsystem bekannt, das zwei im wesentlichen parallel voneinander beabstandete Tragwerke aufweist, wobei in jedem Tragwerk ein mit einer Ladebordwand zusammenwirkender Klappzylinder und ein Hubzylinder vorgesehen sind. Das bekannte Ladebordwandsystem kann an einem Fahrzeug befestigt werden.

Es ist deshalb Aufgabe der vorliegenden Erfindung, ein Ladebordwandsystem der eingangs genannten Art bzw. Arten zu schaffen, das bei hoher Funktionalität, wie sie bei dem gattungsgemäßen Ladebordwandsystem gewährleistet ist, eine Variante des Ladebordwandsystems geschaffen wird, mit der nach Art eines Baukastensystems verschiedene Konfigurationen in Abhängigkeit auch der zu manipulieren gewünschten unterschiedlichen Lasten bereitgestellt werden kann, wobei das erfindungsgemäße Prinzip bei allen möglichen Varianten beibehalten werden soll und insbesondere die Gestehungs- und Betriebskosten sowie die Kosten im Zusammenhang mit der Wartung aufgrund der angestrebten Vereinheitlichung der Konstruktion bei den als möglich angestrebt unterschiedlichen Varianten des Ladebordwandsystems auf der Höhe bisheriger Betriebskosten gehalten werden können sollen, wobei ebenfalls angestrebt wird, diese durch die erfindungsgemäß vorgeschlagene Konstruktion sogar noch zu senken.

Zudem soll das Ladebordwandsystem geeignet sein, insbesondere sehr hohe Lasten, insbesondere auch über 1.500 kg, problemlos sicher manipulieren (handhaben) zu können.

Gelöst wird die Aufgabe gem. der Erfindung mit dem Ladebordwandsystem nach Anspruch 1.

Der Vorteil 1 der erfindungsgemäßen Lösung liegt im wesentlichen darin, daß, wie angestrebt, eine drastische Reduzierung der Konstruktion gegenüber bekannten Ladebordwandsystemen einschl. des gattungsbildenden Systems möglich ist, da faktisch beide Tragwerke, wenn bei einer gewünschten Ausgestaltung zwei kräfteaktive Tragwerke vorgesehen werden sollen, identisch ausgebildet werden können. Dadurch ist auch eine erhebliche Reduzierung einer Bevorratung an den die Tragwerke bildenden einzelnen Elementen wie Aktuatoren und Tragarmen usw. möglich und auch eine einheitliche einzige Steuerung für beide Tragwerke ist realisierbar. Dadurch werden zudem, wie ebenfalls angestrebt, Kosten reduziert und die Gestehungskosten insgesamt für die erfindungsgemäßen Ladebordwandsysteme vermindert. Schließlich ist auch eine Wartung des erfindungsgemäßen Ladebordwandsystems vorteilhafterweise vereinfacht, da selbst bei der Ausführung mit zwei kräfteaktiven Tragwerken eine Bevorratung an Ersatzteilen aber auch eine Verminderung des Wartungsaufwandes selbst möglich, da im Prinzip nur das Wartungswissen für ein kräfteaktives Tragwerk nötig ist.

Gem. einer sehr vorteilhaften Ausgestaltung des Ladebordwandsystems umfaßt das erste Tragwerk und/oder das zweite Tragwerk einen einzigen Tragarm, der über eine Drehachse am Fahrzeug drehbar befestigt ist und über eine zweite, am gegenüberliegenden Ende des einzigen Tragarms angeordnete zweite Drehachse, die im wesentlichen orthogonal zum ersten Tragarm und im wesentlichen parallel zur ersten Drehachse verläuft, drehbar an der Ladebordwand befestigt ist. Die Ausbildung des ersten Tragwerks und/oder des zweiten Tragwerks mit nur einem einzigen Tragarm ist eine vollfunktionsfähige Realisierung einer konstruktiven Lösung. Es ist bspw. aufgrund von Platzproblemen und/oder aufgrund von Gewichtsvorgaben bzw. -einschränkungen dann möglich, eine derartige Konstruktion zu wählen. Eine derartige Lösung kann auch fertigungstechnisch hilfreich sein, da für die Ausbildung eines einzigen Tragarms industriell zur Verfügung stehende Halbzeuge dafür Verwendung finden können.

Gem. einer anderen vorteilhaften Ausgestaltung des Ladebordwandsystems umfaßt das erste Tragwerk und/oder das zweite Tragwerk zwei im wesentlichen parallel voneinander beabstandete erste Tragarme, die über eine erste Drehachse am Fahrzeug drehbar befestigt sind und über eine zweite, am gegenüberliegenden Ende der zwei Tragarme angeordnete zweite Drehachse, die im wesentlichen orthogonal zu den ersten Tragarmen und im wesentlichen parallel zur ersten Drehachse verläuft, drehbar an der Ladebordwand befestigt sind. Diese Ausgestaltung des Ladebordwandsystems hat den großen Vorteil, daß dabei auf konstruktiv einfache Weise die Bedingung erfüllt werden kann, daß die Drehpunkte der Elemente des ersten und/oder des zweiten Tragwerks unter Einschluß des Klappaktuators bzw. der Klappaktuatoren und/oder des Hubaktuators bzw. der Hubaktuatoren in einer Ebene liegen und somit durch diese vorteilhafte Ausgestaltung eine einfach zu realisierende, aber sehr stabile konstruktive Lösung gefunden worden ist.

Gem. einer weiteren anderen vorteilhaften Ausgestaltung des Ladebordwandsystems ist der Hubaktuator an einem ersten Ende drehbar am Fahrzeug befestigt und mit seinem zweiten Ende drehbar am einzigen Tragarm befestigt, wobei es ebenfalls vorteilhaft ist, daß der Hubaktuator an seinem ersten Ende drehbar am Fahrzeug befestigt ist und mit seinem zweiten Ende drehbar an den zwei voneinander beabstandeten ersten Tragarmen befestigt ist, wobei die letztere vorteilhafte Ausgestaltung, die sich auf die Konstruktion mit den zwei voneinander beabstandeten Tragarmen bezieht, letztlich dieselben Drehpunkte einnehmen kann wie die vorbeschriebene vorteilhafte Ausgestaltung mit einem Tragarm, so daß sowohl fahrzeugseitig als auch an den Tragarmen bzw. den einzigen Tragarm selbst faktisch die gleichen Drehpunkte konstruktiv realisierbar sind.

Bei einer noch anderen vorteilhaften Ausgestaltung des Ladebordwandsystems bildet der Hubaktuator im wesentlichen einen Teil des parallelogrammförmigen ersten und/oder zweiten Tragwerkes, d.h. der Hubaktuator wirkt bei Betätigung unmittelbar in das erste und/oder das zweite Tragwerk ein, wodurch ebenfalls wieder eine einfache aber sehr effektiv wirkende Konstruktion des Ladebordwandsystems möglich ist.

Wie zuvor schon angedeutet, können die Tragarme des Ladebordwandsystems gem. der Erfindung, abgesehen von ihrer möglichen unterschiedlichen Ausbildung als einzige Tragarme oder parallel voneinander beabstandete Tragarme im Hinblick auf die Form der Tragarme im Querschnitt unterschiedlich ausgebildet sein. So ist es bspw. ebenfalls sehr vorteilhaft, daß die Tragarme des ersten Tragwerks und/oder die Tragarme des zweiten Tragwerks im Querschnitt rohrförmig ausgebildet sind, es kann aber auch als sehr vorteilhaft angesehen werden, daß die Tragarme des ersten Tragwerks und/oder die Tragarme des zweiten Tragwerks als plattenförmige Elemente ausgebildet sind, wobei die plattenförmigen Elemente aus plattenförmigen Halbzeugen, bspw. aus Stahplatten oder sonstigen beliebigen anderen geeigneten plattenförmigen Werkstoffen bestehen können, und bspw. durch Ausschneiden oder Ausstanzen auf einfache und damit kostengünstige Weise hergestellt werden können. Auch bei der zuvor beschriebenen, im Querschnitt rohrförmigen Ausgestaltung der Tragarme können, wie oben schon angedeutet, beliebige Halbzeuge aus unterschiedlichen, geeigneten Werkstoffen und Werkstoffverbünden genutzt werden.

Um die Befestigung des Ladebordwandsystems sehr einfach und kostengünstig ausführen zu können, so daß auch eine nachträgliche Montage der Ladebordwand an einem Tragwerk des Fahrzeugs möglich ist, derartige Tragwerke bestehen bei Lastkraftwagen i.d.R. aus zwei parallel voneinander beabstandeten, in Fahrzeuglängsrichtung verlaufenden Trägern, und was gleichermaßen auch für eine Demontage wichtig ist, erfolgt vorteilhafterweise die Befestigung des ersten und/oder des zweiten Tragwerks am Fahrzeug über jeweils ein gesondertes Befestigungselement. Das Befestigungselement selbst ist zumindest funktionsmäßig ein Teil des parallelogramförmigen ersten und/oder zweiten Tragwerkes, so daß dafür keine gesonderten Tragwerkkelemente vorgesehen werden müssen. Über das Befestigungselement bzw. die Befestigungselemente ist eine einfache und schnelle Befestigung des Ladebordwandsystems am Tragrahmen des Fahrzeugs möglich.

Das Befestigungselement selbst kann an sich eine beliebige geeignete konstruktive Struktur aufweisen, es hat sich jedoch als vorteilhaft herausgestellt, das Befestigungselement in Form einer plattenförmigen Struktur auszubilden, was wiederum eine einfache Herstellbarkeit, bspw. durch Stanzung oder Ausschneiden aus plattenförmigen Halbzeugen oder Werkstoffplatten, zur Folge hat.

Die Befestigung des ersten und/oder zweiten Tragwerkes an der eigentlichen Ladebordwand erfolgt vorteilhafterweise über jeweils ein gesondertes Adapterelement.

Um beide Tragwerke des Ladebordwandsystems im Hinblick auf die von dem Hubaktuator bzw. den Hubaktuatoren und dem Klappaktuator bzw, den Klappaktuatoren jeweils aufgebrachten Kräfte noch gleichmäßiger in das System aus Tragwerken sowie der Ladebordwand und auch über das Tragrahmensystem des Fahrzeugs, an dem das Ladebordwandsystem befestigt ist, einleiten zu können, sind vorzugsweise das erste und das zweite Tragwerk starr über ein Verbindungselement miteinander verbunden. Das Verbindungselement ist quasi ein paralleles Verbindungselement zu dem Verbindungselement, das bei Befestigung des Ladebordwandsystems eben durch die besagten Träger des Fahrzeugs gebildet wird, ggf. auch durch das Chassis eines Fahrzeugs mit selbsttragender Karosserie, so daß, wie angestrebt, auch bei ungleichmäßiger Belastung der eigentlichen Ladebordwand die in dem System auftretenden Kräfte noch gleichmäßiger auf beide Tragwerke verteilt werden können, weitgehend unabhängig von torsionsbedingten Drehungen der Träger des Kraftfahrzeugs oder des Chassis selbst bei ungleichmäßiger Belastung des Ladebordwandsystems insgesamt.

Das Verbindungselement kann im Prinzip auf beliebige geeignete Weise ausgebildet sein, es ist jedoch ganz besonders vorteilhaft, das Verbindungselement mit rohrförmigem Querschnitt auszubilden, wobei das Verbindungselement vorzugsweise die zusätzliche Funktion als Unterfahrschutz vor Fahrzeugen Dritter einnehmen kann. Ein derartiger Unterfahrschutz vor Fahrzeugen Dritter ist in vielen Staaten gesetzlich vorgeschrieben, hat aber bei einer Reihe der bekannten Ladebordwandsysteme aufgrund der bekannten Konstruktionen den Nachteil, daß, da ein Verschwenken der Ladebordwand zur Ausführung des Hub- und Senkvorganges zur Folge hat, da die Verschwenkelemente in den Schwenkbereich der bekannten Tragwerke hineinragen, der Unterfahrschutz dreigeteilt ausgebildet werden muß, wodurch der Unterfahrschutz eines Teils seiher bestimmungsgemäßen Funktion beraubt wird. Die erfindungsgemäße vorteilhafte Lösung ermöglicht es hingegen, den Unterfahrschutz als einheitliches, einziges Element auszubilden.

Prinzipiell kann das Verbindungselement bzw. der Unterfahrschutz an dem ersten und dem zweiten Tragwerk auf beliebige Weise angebracht werden, d.h. bspw. auch mittels Schweißung mit diesem verbunden werden. Es ist aber außerordentlich vorteilhaft, das Verbindungselement über jeweils ein gesondertes Halteelement mit dem ersten und dem zweiten Tragwerk lösbar zu verbinden, d.h. alle Verbindungselemente bei Beschädigungen durch ein auffahrendes Fahrzeug und auch im Zuge der einfachen Wartung das Halteelements am ersten und zweiten Tragelement durch Schrauben-Mutter-Verbindungen auszubilden, d.h. die Halteelemente mit dem Unterfahrschutz nach Art eines Flansches zu befestigen, wobei das Verbindungselement bzw. der Unterfahrschutz selbst mit den Halteelementen zu seiner Befestigung durch Schweißung befestigt werden kann.

Prinzipiell kann der Hubaktuator bzw. können die Hubaktuatoren und/oder der Klappaktuator bzw. die Klappaktuatoren auf beliebige geeignete Weise betrieben werden, vorzugsweise aber hydraulisch. Für besondere Anwendungszwecke, die die Verwendung von Hydraulikmitteln in diesem Bereich ausschließen, kann vorzugsweise der Hubaktuator bzw. können die Hubaktuatoren und/oder der Klapppaktuator bzw. die Klappaktuatoren pneumatisch betrieben werden, wobei es schließlich vorzugsweise auch möglich ist, den Hubaktuator bzw. die Hubaktuatoren und/oder den Klappaktuator bzw. die Klappaktuatoren elektromotorisch anzutreiben, d.h. ein Elektromotor treibt eine Spindel, die im Hubaktuator bzw. im Klappaktuator als Verschiebungsachse vorgesehen ist, so daß über diesen Weg die bestimmungsgemäße Bewegung des Hubaktuators und/oder des Klappaktuators ausgeführt werden kann.

Die Erfindung wird nun unter Bezugnahme auf die nachfolgenden schematischen Zeichnungen anhand verschiedener Ausführungsbeispiele im einzelnen beschrieben. Darin zeigen:
- Fig. 1: in perspektivischer Darstellung ein Ladebordwandsystem gem. der Erfindung, das über Befestigungselemente an horizontalen Stegen eines Tragrahmens eines Fahrzeugs befestigt ist, wobei die Ladebordwand sich in im wesentlichen abgesetzten Zustand befindet,
- Fig. 2: in perspektivischer Darstellung das Ladebordwandsystem unter Weglassung der eigentlichen Ladebordwand, umfassend zwei im wesentlichen identisch aufgebaute erste und zweite Tragwerke, wobei an einem Tragwerk eine Bedien- und Hydraulikeinheit angeordnet ist, über die die Aktuatoren hydraulisch betreibbar sind,
- Fig. 3: in noch größerem Detail gegenüber der Darstellung von Fig. 2 ein Ladebordwandsystem unter Weglassung der Ladebordwand,

- Fig. 4: eine Darstellung wie gem. Fig. 3, jedoch aus der entgegengesetzten Perspektive dargestellt,
- Fig. 5: eine Draufsicht auf ein Tragwerk unter Weglassung der Ladebordwand,
- Fig. 6: die Elemente des ersten Tragwerks und des zweiten Tragwerks sowie des daran angreifenden Hubaktuators und des daran angreifenden Klappaktuators,
- Fig. 7: eine Darstellung gem. Fig. 6, bei der jedoch sowohl der Hubaktuator als auch der Klappaktuator am zweiten Tragwerk angreifen, und
- Fig. 8: eine Darstellung des Ladebordwandsystems, bei dem sowohl das erste Tragwerk als auch das zweite Tragwerk auf identische Weise sowohl mit einem Hubaktuator als auch mit einem Klappaktuator versehen sind.

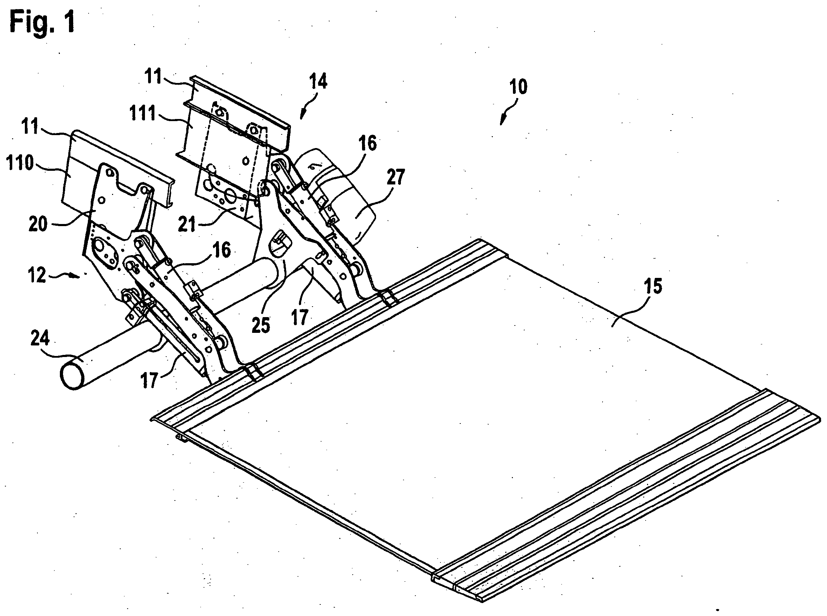

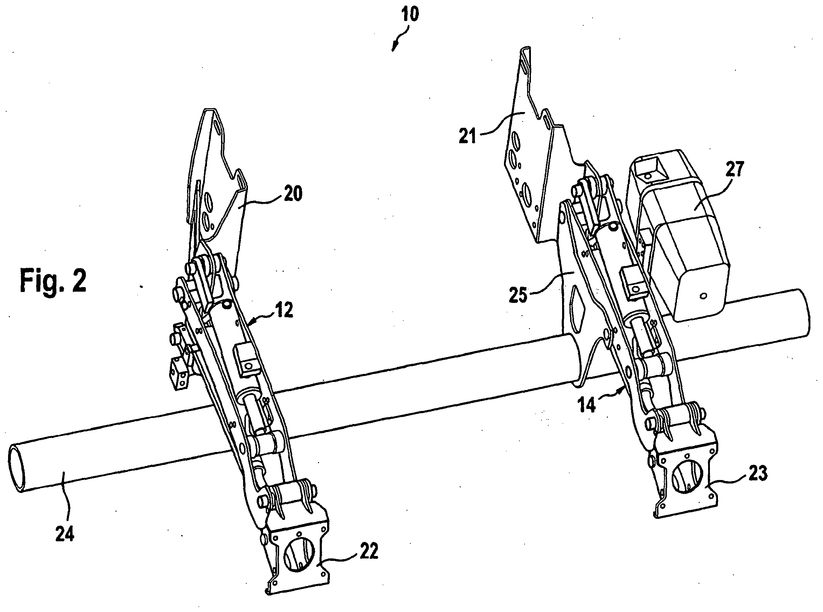

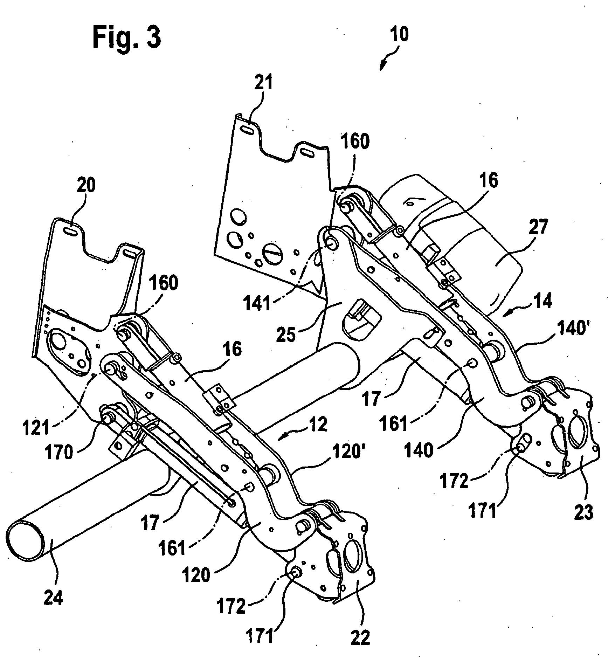

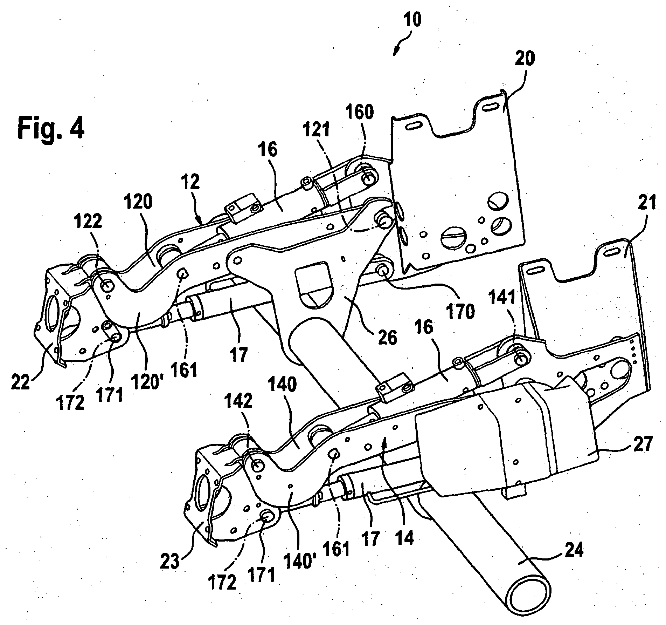

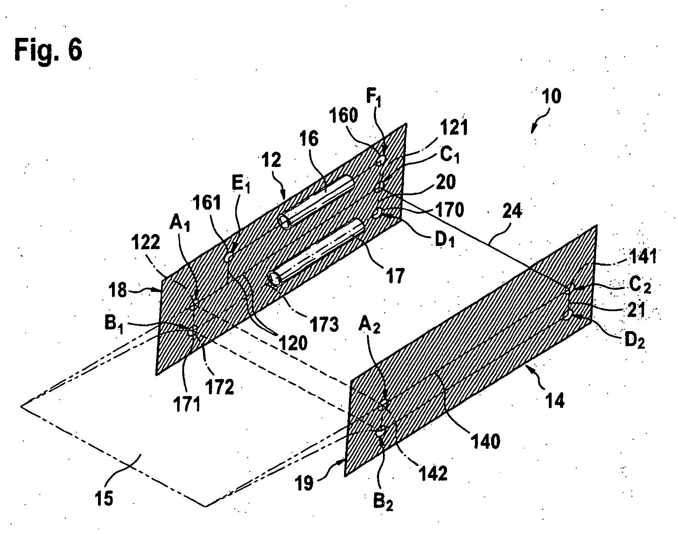

Anhand der Darstellungen gem. den Fig. 1 bis 5 wird das Ladebordwandsystem 10 im Hinblick auf seinen grundsätzlichen Aufbau beschrieben. Das Ladebordwandsystem 10 umfaßt im wesentlichen zwei Tragwerke, nämlich ein erstes Tragwerk 12 und ein zweites Tragwerk 14, die im wesentlichen parallel voneinander beabstandet an einem Fahrzeug 11 über Befestigungselemente 20, 21 befestigt werden. Die Befestigung erfolgt regelmäßig am Tragrahmen 110, 111 des Fahrzeugs 11. Das erste und das zweite Tragwerk 12, 14 bilden jeweils zusammen mit den Befestigungselementen 20, 21 eine parallelogrammförmige Struktur. Über den Aufbau der parallelogrammförmigen Struktur beider Tragwerke 12, 14 wird im einzelnen im Hinblick auf den Aufbau weiter unten im Zusammenhang mit der Beschreibung der Fig. 6 bis 8 im einzelnen eingegangen. Im Hinblick auf das jeweils kräfteaktiv ausgebildete Tragwerk 12, 14 wird jedoch im Zusammenhang mit der Ausbildung eines ersten einzigen Tragarms 120; 140 im Einzelfall auf die Darstellung gem. den Fig. 6 bis 8 Bezug genommen. Mit dem ersten und zweiten Tragwerk 12, 14 ist eine im wesentlichen plattenförmige Ladebordwand 15, vgl. Fig. 1, zum Heben und Absenken einer Last (ohne Last dargestellt) und zum Verschließen eines Stauraums des Fahrzeugs 11 drehbar verbunden.

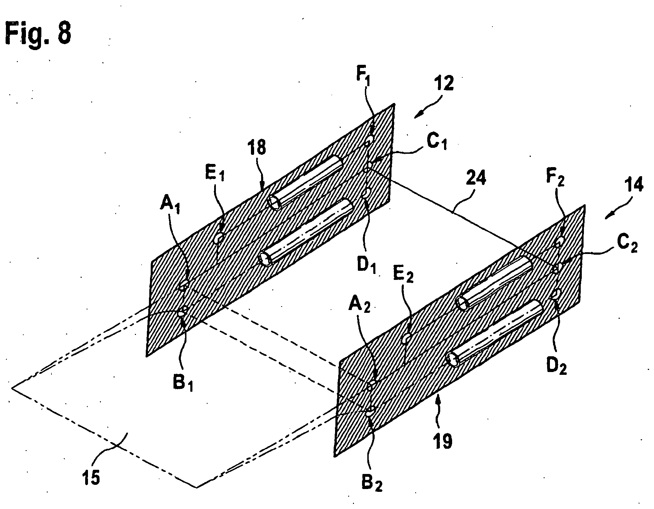

In den Fig. 1 bis 4 ist das Ladebordwandsystem 10 mit erstem und zweitem Tragwerk 12, 14 dargestellt, die beide einen identischen Aufbau haben, und zwar auch gem. dem in Fig. 8 dargestellten Ladebordwandsystem 10. Da beide Tragwerke 12, 14 gem. den Fig. 1 bis 4 sowie 8 identisch aufgebaut sind, wird nachfolgend lediglich ein Tragwerk 12, 14 im Hinblick auf seinen Aufbau anhand des ersten Tragwerks 12, in den Fig. 1 bis 4 links dargestellt, s. auch die Fig. 6 und 8, beschrieben. Die Ausgestaltung des Ladebordwahdsystems in den Fig. 1 bis 5 umfaßt ein erstes Tragwerk 12, das wiederum zwei im wesentlichen parallel voneinander beabstandete erste Tragarme 120, 120' umfaßt. Diese beiden Tragarme 120, 120' sind über eine gemeinsame erste Drehachse 121 am Befestigungselement 20 drehbar befestigt. Die am engegengesetzten Ende der ersten Tragarme 120, 120' ausgebildete zweite Drehachse 122 ist drehbar an der Ladebordwand 15 befestig. Die Drehachse verläuft im wesentlichen orthogonal zu den ersten Tragarmen 120, 120' und im wesentlichen parallel zur ersten Drehachse 121.

Teil des im wesentlichen parallelogrammförmigen ersten bzw. zweiten Tragwerks 12, 14 ist ein Hubaktuator 16, der in den Fig. 6 bis 8 aus Gründen des besseren Verständnisses des Aufbaus des Ladebordwandsystems deutlich oberhalb des ersten Tragarms 120, 120' liegend dargestellt ist. Bei der technisch konstruktiv realisierten Ausgestaltung des Ladebordwandsystems 10 ist der Hubaktuator 16 an seinem ersten Ende 160 drehbar über das Befestigungselement 20 und über dieses am Fahrzeug 11 oberhalb der ersten Drehachse 121 des ersten Tragwerks 120. 120' drehbar befestigt, um für dem Hubaktuator 16 einen geeigneten Hebelwinkel zu verschaffen, damit die Ladebordwand 15 von einem Untergrund im abgesenkten Zustand der Ladebordwand 15 auf die Ebene der Ladeplattform (nicht dargestellt) eines Fahrzeugs 11 geeignet angehoben werden kann. Das zweite Ende 161 des Hubaktuators 16 ist drehbar am ersten Tragarm 120, 120' befestigt.

Im ersten Tragwerk bzw. zweiten Tragwerk 12, 14 ist ebenfalls in dessen parallelogrammförmige Struktur ein Klappaktuator 17 integriert. Der Klappaktuator 17 ist an seinem ersten Ende 170 drehbar über das Befestigungselement 20 und über dieses am Fahrzeug 11 befestigt und mit seinem zweiten Ende 171 um eine Drehachse 172 drehbar mit der Ladebordwand 15 befestigt. Die Drehachse 172 verläuft im wesentlichen orthogonal zur Längsachse 173 des Klappaktuators 17, d.h. im wesentlichen in der Richtung, in der vom Klappaktuator 17 eine Kraft bei entsprechender Betätigung ausgeübt wird. Die Längsachse 173 des Klappaktuators 17 verläuft somit im wesentlichen ebenfalls in der Klapp- und der Hubebene, die durch die schematisch in den Fig. 6 bis 8 dargestellten Ebenen 18; 19 des ersten und des zweiten Tragwerks 12; 14 verlaufen. Auch der Hubaktuator 16 bildet im wesentlichen einen Teil der parallelogrammförmigen Struktur des ersten und des damit identisch aufgebauten zweiten Tragwerks 12; 14.

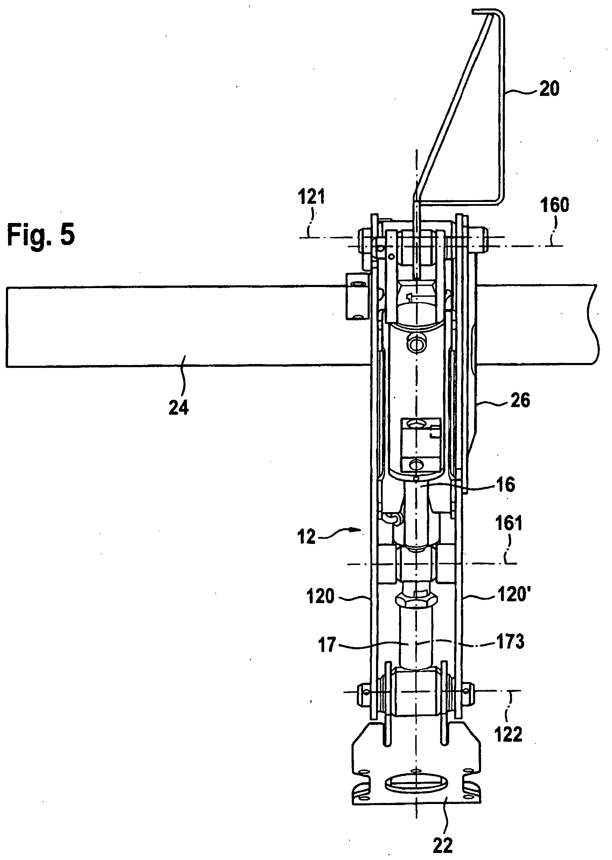

Bei den in den Fig. 1 bis 5 dargestellten Ausführungsformen des Ladebordwandsystems 10 sind die Tragarme 120, 120' des ersten Tragwerks 12, was sinngemäß auch aufgrund der konstruktiven Identität der beiden Tragwerke 12, 14 auch für Tragwerk 14 gilt, auch die Tragarme 140, 140' des zweiten Tragwerks plattenförmig ausgebildet, was insbesondere anhand der Fig. 5, die eine Draufsicht auf das Tragwerk 12 zeigt, deutlich sichtbar ist. Es ist aber auch grundsätzlich möglich (in den Fig. nicht dargestellt) die Tragarme 120, 120' des ersten Tragwerks und/oder die Tragarme 140, 140' des zweiten Tragwerks 14 im Querschnitt rohrförmig mit an sich beliebiger Querschnittsform auszubilden. Es ist auch möglich, den einen Tragarm des einen Tragwerks 12, 14 im Querschnitt rohrförmig auszubilden und/oder den anderen Tragarm des anderen Tragwerks mit Tragarmen auszubilden, die, wie vorangehend beschrieben, eine plattenförmige Struktur aufweisen.

Die Befestigung des ersten und/oder des zweiten Tragwerkes 12; 14 erfolgt an der Ladebordwand 11 über jeweils ein gesondertes Adapterelement 22; 23. Zwar ist es grundsätzlich möglich, wie vorangehend auch der Einfachheit wegen beschrieben, das erste Tragwerk 12 und/oder das das zweite Tragwerk 14, direkt mit der Ladebordwand 15 zu verbinden, das konstruktive Zwischenschalten von Adapterelementen 22, 23 schafft aber die Möglichkeit, das Ladebordwandsystem 10 an unterschiedlich konstruktiv ausgestalteten Ladebordwänden 15 zu befestigen und eine Montage des Ladebordwandsystems 10 an der Ladebordwand 15 bzw. ein Entfernen der Ladebordwand 15 vom Ladebordwandsystem 10 auf einfache Weise zu ermöglichen, ohne daß das Gesamtsystem Ladebordwandsystem 10 beeinträchtigt wird.

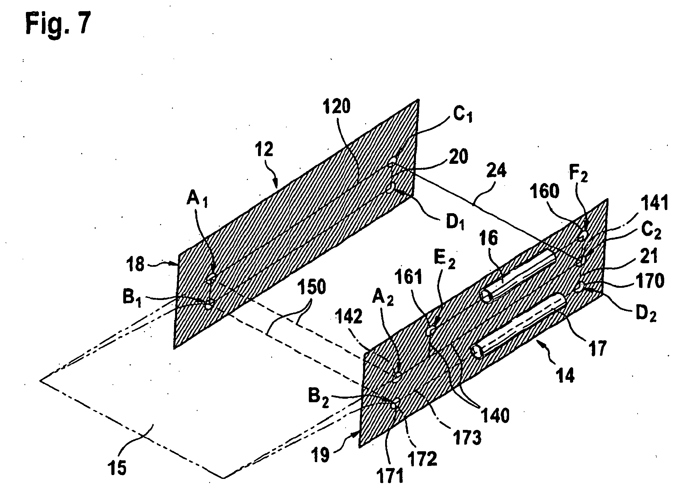

In den Fig. 6 bis 8 wird die Struktur der Ladebordwand 10 gem. der Erfindung dargestellt, und zwar in Fig. 6 mit einem kräfteaktiven ersten Tragwerk 12, in Fig. 7 mit einem kräfteaktiven zweiten Tragwerk 14 und in Fig. 8 mit sowohl einem ersten kräfteaktiven Tragwerk 12 als auch einem zweiten kräfteaktiven Tragwerk 14. Alle drei gem. den Fig. 6 bis 8 dargestellten Ausgestaltungen des Ladebordwandsystems 10 sind erfindungsgemäß möglich. Die in den Fig. 6 bis 8 dargestellten Ausgestaltungen des Ladebordwandsystems sind ausdrücklich keine schematischen Darstellungen, sondern Darstellungen der verschiedenen möglichen, mit der Erfindung realisierbaren Ladebordwandsysteme 10, die alle in vollem Umfang konstruktiv realisierbar sind, d.h. beispielsweise so ausgestaltet sind, daß das erste Tragwerk 12 und/oder das zweite Tragwerk 14 nur einen einzigen Tragarm 120; 140 umfassen. Im Zusammenhang mit der Darstellung bzw. Beschreibung des Ladebordwandsystems 10 anhand der Fig. 1 bis 5 war von einem ersten und/oder zweiten Tragwerk 12; 14 die Rede, bei denen die jeweiligen ersten Tragarme 120 bzw. zweiten Tragarme 140 aus jeweils zwei voneinander beabstandeten Tragarmen 120, 120' bzw. 140, 140' bestehen. Die in den Fig. 6 bis 8 dargestellten Ausführungsformen des Ladebordwandsystems 10 umfassen jeweils einen einzigen ersten Tragarm 120 bzw. einen einzigen zweiten Tragarm 140.

In den Fig. 6 bis 8 ist das Hebelschema der ersten und zweiten Tragwerke 12, 14, die eine im wesentlichen parallelogrammförmige Struktur aufweisen, i.V.m. dem Hubaktuator 16 sowie dem Klappaktuator 14 dargestellt. Der Hubaktuator 16 und der Klappaktuator 17 bilden im wesentlichen einen integralen Teil des ersten Tragwerks 12 sowie des zweiten Tragwerks 14, vgl. Fig. 8, oder des ersten Tragwerks 12, vgl. Fig. 6, oder des zweiten Tragwerks 14, vgl. Fig. 7. Die Kräfteeinleitungspunkte des Hubaktuators 16 und des Klappaktuators 17 in das erste Tragwerk 12 oder das zweite Tragwerk 14 oder in beide Tragwerke 12, 14 liegen in der jeweiligen Ebene 18 oder 19 der Drehpunkte A₁, 122; B₁, 171 bzw. 172; C₁,121; D₁, 170 sowie E₁, 161 und F₁, 160. Entsprechendes gilt für die durch das zweite Tragwerk 14 gebildete Ebene 19, in der die Drehpunkte bzw. Kräfteeinleitungspunkte in den Drehpunkten A₂, 142; B₂, 171, 172; C₂, 141; D₂, 170 sowie E₂, 161 und F₂, 171 liegen.

Teil der parallelogrammförmig strukturierten ersten und zweiten Tragwerke 12, 14 sind die jeweiligen Befestigungselemente 20, 21, über die bzw. mit denen das Ladebordwandsystem 10 am Fahrzeug 11 befestigt wird. Die Befestigungselemente 20, 21, die darstellerisch hier nicht weiter ausgeführt sind, können aus flachen, blechförmigen Elementen ausgebildet sein, in denen Achsbuchsen für die Drehachsen 121, 160, 170, erstes Tragwerk 12, bzw. 141, 160, 170, zweites Tragwerk 14, auf einfache Weise aufgenommen werden können. Die Befestigung der Befestigungselemente 20, 21 am Tragrahmen 110, 111 eines Fahrzeugs 11 kann auf hier nicht näher dargestellte Weise durch Schrauben-Mutter-Verbindung oder dgl. erfolgen.

Das auch in den Fig. 7 bis 9 dargestellte Verbindungselement 24 zwischen dem ersten Tragwerk 12 und dem zweiten Tragwerk 14, das unmittelbar an dem ersten Tragarm 120 und dem zweiten Tragarm 140 angeschlossen wird bzw. werden kann, dient der Überleitung der Kräfte bei Betätigung des Ladebordwandsystems, d.h. bei seinem bestimmungsgemäßen Betrieb, der Überleitung der dabei entstehenden Kräfte vom ersten Tragwerk 12 in das zweite Tragwerk 14 bzw. vom zweiten Tragwerk 14 in das erste Tragwerk 12. An dieser Kräfteleitung in beiden Richtungen beim bestimmungsgemäßen Betrieb des Ladebordwandsystems trägt im Prinzip auch die Ladebordwand 15, die mit dem ersten und dem zweiten Tragwerk 12, 14 verbunden ist, bei, was durch die Bezugsziffer 150 in den Fig. 7 bis 9 symbolisiert wird. Die Ladebordwand 15 bildet funktionsgemäß ein zweites Verbindungselement 150 im Bereich der freien Enden 161, 171 der beiden Tragwerke 12, 14.

Das Verbindungselement 24 dient zusätzlich auch als Unterfahrschutz des Ladebordwandsystems 10 bzw. des Fahrzeugs 11, an dem das Ladebordwandsystem befestigt ist, vor dem Unterfahren durch Fahrzeuge Dritter.

Sowohl der Hubaktuator 26 bzw. die Hubaktuatoren 16 als auch der Klappaktuator 17 bzw. die Klappaktuatoren 17 können grundsätzlich entweder hydraulisch und/oder pneumatisch und/oder elektromotorisch betrieben werden.

### Bezugszeichenliste

- 10: Ladebordwandsystem
- 11: Fahrzeug
- 110: Tragrahmen
- 111: Tragrahmen
- 12: erstes Tragwerk
- 120: erster Tragarm
- 121: erste Drehachse
- 122: zweite Drehachse
- 13:
- 14: zweites Tragwerk
- 140: zweiter Tragarm
- 141: erste Drehachse
- 142: zweite Drehachse
- 15: Ladebordwand
- 150: zweites Verbindungselement (Kräfteleitung)
- 16: Hubaktuator
- 160: erstes Ende
- 161: zweites Ende
- 17: Klappaktuator
- 170: erstes Ende
- 171: zweites Ende
- 172: Drehachse
- 173: Längsachse
- 18: Ebene (erstes Tragwerk 12)
- 19: Ebene (zweites Tragwerk 14)
- 20: Befestigungselement
- 21: Befestigungselement
- 22: Adapterelement
- 23: Adapterelement
- 24: Verbindungselement
- 25: Halteelement
- 26: Halteelement
- 27: Steuer- und Hydraulikeinrichtung

## Patentansprüche

1. Ladebordwandsystem (10) zur Befestigung an Fahrzeugen (11) und/oder Fahrzeuganhängern und/oder Sattelaufliegern, insbesondere Lastkraftfahrzeugen, umfassend zwei im wesentlichen parallel voneinander beabstandete, jeweils im wesentlichen parallelogrammförmige Tragwerke (12, 14), wobei sowohl das erste als auch das zweite Tragwerk (12,14) eine Hub- und Senkbewegung einer im wesentlichen plattenförmigen Ladebordwand (15) ein Heben und Absenken einer Last aufgrund einer in das Tragwerk (12, 14) eingeleiteten, von je einem pro Tragwerk (12, 14) vorgesehenen Hubaktuator (16) erzeugten Kraft ausführt, und ein pro Tragwerk (12,14) vorgesehener Klappaktuator (17) ein Verschwenken der Ladebordwand (15) von der Horizontalen in die Vertikale und umgekehrt ausführt, wobei die vom Klappaktuator (17) erzeugte Kraft in jeweils in dasselbe erste bzw. zweite Tragwerk (12, 14) eingeleitet wird, in das auch die vom Hubaktuator (16) erzeugte Kraft eingeleitet wird, wobei die Kräfteeinleitungspunkte sowohl des jeweiligen Hubaktuators (16) als auch die des jeweiligen Klappaktuators (17) in dasselbe erste bzw. zweite Tragwerk (12, 14), in den durch die Drehpunkte A1, B1, C1, sowie E1, F1 bzw. A2, B2, C2 sowie E2, F2 gebildeten jeweiligen Ebenen (18, 19) liegen, in der der Hubaktuator (16) und der Klappaktuator (17) in bezug auf die von ihnen auf die bzw. in den jeweiligen Tragwerken (12,14) ausgeübten Kräfte einwirken, **dadurch gekennzeichnet, daß** auch ein Drehpunkt D1 im ersten Tragwerk (12) und ein Drehpunkt D2 im zweiten Tragwerk (14) des vorgesehenen, am Fahrzeug (11) drehbar befestigten jeweiligen Klappaktuators (17) in der jeweiligen Ebene (18, 19) liegt, wobei der Klappaktuator (17) einen Teil des parallelogrammförmigen ersten und/oder zweiten Tragwerkes (12; 14) bildet, und an seinem ersten Ende (170) drehbar am Fahrzeug (11) befestigt ist und mit seinem zweiten Ende (171) um eine Drehachse (172) im wesentlichen orthogonal zur Längsachse (173) des Klappaktuators (17) drehbar mit der Ladebordwand (15) befestigt ist.

2. Ladebordwandsystem nach Anspruch 1, **dadurch gekennzeichnet, daß** das erste Tragwerk (12) und/oder das zweite Tragwerk (14) einen einzigen Tragarm (120; 140) umfaßt, der über eine erste Drehachse (121; 141) am Fahrzeug (11) drehbar befestigt ist und über eine zweite, am gegenüberliegenden Ende des einzigen Tragarmes (120; 140) angeordnete zweite Drehachse (122; 142), die im wesentlichen orthogonal zum ersten Tragarm (120;140) und im wesentlichen parallel zur ersten Drehachse (121; 141) verläuft, drehbar an der Ladebordwand (15) befestigt ist.

3. Ladebordwandsystem nach Anspruch 1, **dadurch gekennzeichnet, daß** das erste Tragwerk (12) und/oder das zweite Tragwerk (14) zwei im wesentlichen parallel voneinander beabstandete erste Tragarme (120, 120'; 140, 140') umfaßt, die über eine erste Drehachse (122) am Fahrzeug (11) drehbar befestigt sind und über eine zweite, am gegenüberliegenden Ende der zwei Tragarme (120, 120'; 140, 140') angeordnete zweite Drehachse (122, 142), die im wesentlichen orthogonal zu dem ersten Tragarm (120; 120') und im wesentlichen parallel zur ersten Drehachse (121; 141) verläuft, drehbar an der Ladebordwand (15) befestigt sind.

4. Ladebordwandsystem nach einem oder beiden der Ansprüche 1 oder 2, **dadurch gekennzeichnet, daß** der Hubaktuator (16) an seinem ersten Ende (160) drehbar am Fahrzeug (11) befestigt ist und mit seinem zweiten Ende (161) drehbar am einzigen Tragarm (120; 140) befestigt ist.

5. Ladebordwandystem nach einem oder beiden der Ansprüche 1 oder 3, **dadurch gekennzeichnet, daß** der Hubaktuator (16) an seinem ersten Ende (160) drehbar am Fahrzeug (11) befestigt ist und mit seinem zweiten Ende (161) drehbar an den zwei voneinander beabstandeten ersten Tragarmen (120, 120'; 140, 140') befestigt ist.

6. Ladebordwandsystem nach einem oder mehreren der Ansprüche 1 bis 5, **dadurch gekennzeichnet, daß** der Hubaktuator (16) im wesentlichen einen Teil des parallelogrammförmigen ersten und/oder zweiten Tragwerks (12; 14) bildet.

7. Ladebordwandsystem nach einem oder mehreren der Ansprüche 1 bis 6, **dadurch gekennzeichnet, daß** die Tragarme (120; 120, 120') des ersten Tragwerkes (12) und/oder die Tragarme (140; 140, 140') des zweiten Tragwerkes (14) im Querschnitt rohrförmig ausgebildet sind.

8. Ladebordwandsystem nach einem oder mehreren der Ansprüche 1 bis 6, **dadurch gekennzeichnet, daß** die Tragarme (120; 120, 120') des ersten Tragwerkes (12) und/oder die Tragarme (140; 140, 140') des zweiten Tragwerks (14) als plattenförmige Elemente ausgebildet sind.

9. Ladebordwandsystem nach einem oder mehreren der Ansprüche 1 bis 8, **dadurch gekennzeichnet, daß** die Befestigung des ersten und/oder zweiten Tragwerkes (12; 14) am Fahrzeug (11) über jeweils ein gesondertes Befestigungselement (20; 21) erfolgt.

10. Ladebordwandsystem nach Anspruch 9, **dadurch gekennzeichnet, daß** das Befestigungselement (20; 21) eine plattenförmige Struktur aufweist.

11. Ladebordwandsystem nach einem oder mehreren der Ansprüche 1 bis 10, **dadurch gekennzeichnet, daß** die Befestigung des ersten und/oder des zweiten Tragwerkes (12; 14) an der Ladebordwand (11) über jeweils ein gesondertes Adapterelement (22, 23) erfolgt.

12. Ladebordwandsystem nach einem oder mehreren der Ansprüche 1 bis 11, **dadurch gekennzeichnet, daß** das erste und das zweite Tragwerk (12, 14) starr über ein Verbindungselement (24) verbunden sind.

13. Ladebordwandsystem nach Anspruch 12, **dadurch gekennzeichnet, daß** das Verbindungselement (24) einen rohrförmigen Querschnitt aufweist und zusätzlich als Unterfahrschutz vor Fahrzeugen Dritter dient.

14. Ladebordwandsystem nach einem oder beiden der Ansprüche 12 oder 13, **dadurch gekennzeichnet, daß** das Verbindungselement (24) über jeweils ein Halteelement (25, 26) mit dem ersten und zweiten Tragwerk (12, 14) lösbar verbunden sind.

15. Ladebordwandsystem nach einem oder mehreren der Ansprüche 1 bis 14, **dadurch gekennzeichnet, daß** der Hubaktuator (16) und/oder der Klappaktuator (17) hydraulisch betrieben wird bzw. werden.

16. Ladebordwandsystem nach einem oder mehreren der Ansprüche 1 bis 14, **dadurch gekennzeichnet, daß** der Hubaktuator (16) und/oder der Klappaktuator (17) pneumatisch betrieben wird bzw. werden.

17. Ladebordwandsystem nach einem oder mehreren der Ansprüche 1 bis 14, **dadurch gekennzeichnet, daß** der Hubaktuator (16) und/oder der Klappaktuator (17) elektromotorisch betrieben wird bzw. werden.

## Claims

1. Loading platform system (10) for fastening to vehicles (11) and/or vehicle trailers and/or semitrailers, in particular commercial vehicles, comprising two in each case substantially parallelogram-shaped support units (12, 14) which are mutually spaced apart in a substantially parallel manner, wherein the first as well as the second support unit (12, 14) carry out a lifting and lowering movement of a substantially plate-shaped loading platform (15), lifting and lowering of a load by virtue of force that is introduced into the support unit (12, 14) and generated by in each case one lifting actuator (16) provided per support unit (12, 14), and one folding actuator (17) that is provided per support unit (12, 14) carries out pivoting of the loading platform (15) from the horizontal to the vertical and vice versa, wherein the force generated by the folding actuator (17) is in each case introduced into the same first or second support unit (12, 14), respectively, into which the force generated by the lifting actuator (16) is also introduced, wherein the force-introduction points of the respective lifting actuator (16) as well as of the respective folding actuator (17) into the same first or second support unit (12, 14), respectively, lie in the respective planes (18, 19) formed by the rotation points A1, B1, C1, as well as E1, F1, or A2, B2, C2, as well as E2, F2 in which the lifting actuator (16) and the folding actuator (17) in terms of the forces exerted thereby on or in the respective support units (12, 14) act, **characterized in that** a rotation point D1 in the first support unit (12) and a rotation point D2 in the second support unit (14) of the provided respective folding actuator (17) that is rotatably fastened to the vehicle (11) also lie in the respective plane (18, 19), wherein the folding actuator (17) forms part of the parallelogram-shaped first and/or second support unit (12; 14) and at the first end (170) of said folding actuator (17) is rotatably fastened to the vehicle (11), and by way of the second end (17) of said folding actuator (171) is fastened to the loading platform (15) so as to be rotatable about a rotation axis in a manner substantially orthogonal to the longitudinal axis (173) of the folding actuator (17).

2. Loading platform system according to Claim 1, **characterized in that** the first support unit (12) and/or the second support unit (14) comprise/comprises a single support arm (120; 140) which by way of a first rotation axis (121; 141) is rotatably fastened to the vehicle (11), and by way of a second rotation axis (122; 142) which is disposed on the opposite end of the single support arm (120; 140) and runs so as to be substantially orthogonal to the first support arm (120; 140) and so as to be substantially parallel to the first rotation axis (121; 141), is rotatably fastened to the loading platform (15).

3. Loading platform system according to Claim 1, **characterized in that** the first support unit (12) and/or the second support unit (14) comprise/comprises two first support arms (120, 120'; 140; 140') which are mutually spaced apart so as to be substantially parallel and which by way of a first rotation axis (122) are rotatably fastened to the vehicle (11), and by way of a second rotation axis (122, 142) which is disposed on the opposite end of the two support arms (120, 120'; 140, 140') and runs so as to be substantially orthogonal to the first support arm (120; 120') and so as to be substantially parallel to the first rotation axis (121; 141), are rotatably fastened to the loading platform (15).

4. Loading platform system according to one of or both Claims 1 and 2, **characterized in that** the lifting actuator (16) at the first end (160) thereof is rotatably fastened to the vehicle (11), and by way of the second end (161) thereof is rotatably fastened to the single support arm (120; 140).

5. Loading platform system according to one of or both Claims 1 and 3, **characterized in that** the lifting actuator (16) at the first end (160) thereof is rotatably fastened to the vehicle (11), and by way of the second end (161) thereof is rotatably fastened to the two mutually spaced apart first support arms (120, 120'; 140; 140').

6. Loading platform system according to one or a plurality of Claims 1 to 5, **characterized in that** the lifting actuator (16) substantially forms part of the parallelogram-shaped first and/or second support unit (12; 14).

7. Loading platform system according to one or a plurality of Claims 1 to 6, **characterized in that** the support arms (120; 120, 120') of the first support unit (12) and/or the support arms (140; 140, 140') of the second support unit (14) in the cross section are configured so as to be tubular.

8. Loading platform system according to one or a plurality of Claims 1 to 6, **characterized in that** the support arms (120; 120, 120') of the first support unit (12) and/or the support arms (140; 140, 140') of the second support unit (14) are configured as plate-shaped elements.

9. Loading platform system according to one or a plurality of Claim 1 to 8, **characterized in that** the fastening of the first and/or the second support unit (12; 14) to the vehicle (11) is in each case performed by way of a dedicated fastening element (20; 21).

10. Loading platform system according to Claim 9, **characterized in that** the fastening element (20; 21) has a plate-shaped structure.

11. Loading platform system according to one or a plurality of Claims 1 to 10, **characterized in that** the fastening of the first and/or the second support unit (12; 14) to the loading platform (11) is in each case performed by way of a dedicated adapter element (22, 23) .

12. Loading platform system according to one or a plurality of Claims 1 to 11, **characterized in that** the first and the second support unit (12, 14) are rigidly connected by way of a connection element (24) .

13. Loading platform system according to Claim 12, **characterized in that** the connection element (24) has a tubular cross section and additionally serves as an underride protection against third-party vehicles.

14. Loading platform system according to one of or both Claims 12 and 13, **characterized in that** the connection element (24) is in each case releasably connected to the first and the second support unit (12, 14) by way of one holding element (25, 26).

15. Loading platform system according to one or a plurality of Claims 1 to 14, **characterized in that** the lifting actuator (16) and/or the folding actuator (17) are/is hydraulically operated.

16. Loading platform system according to one or a plurality of Claims 1 to 14, **characterized in that** the lifting actuator (16) and/or the folding actuator (17) are/is pneumatically operated.

17. Loading platform system according to one or a plurality of Claims 1 to 14, **characterized in that** the lifting actuator (16) and/or the folding actuator (17) are/is electromotively operated.

## Revendications

1. Système de hayon de chargement (10) destiné à être fixé à des véhicules (11) et/ou à des remorques et/ou à des semi-remorques, en particulier à des camions, comprenant deux structures portantes (12, 14) espacées l'une de l'autre de manière sensiblement parallèle et ayant chacune une forme de parallélogramme, la première et la deuxième structure portante (12, 14) effectuant un mouvement de levage et d'abaissement d'un hayon de chargement (15) sensiblement en forme de plaque, un levage et un abaissement d'une charge en raison d'une force générée par un actionneur de levage (16) prévu pour chaque structure portante (12, 14) et injectée dans la structure portante (12, 14), et un actionneur de rabattement (17) prévu pour chaque structure portante (12,14) effectuant un pivotement du hayon de chargement (15) de la position horizontale à la position verticale et inversement, la force générée par l'actionneur de rabattement (17) étant injectée dans la même première ou deuxième structure portante (12, 14) dans laquelle la force générée par l'actionneur de levage (16) est également injectée, les points d'injection de force de l'actionneur de levage (16) respectif et de l'actionneur de rabattement (17) respectif dans la même première ou deuxième structure portante (12, 14) étant situées dans les plans (18, 19) formés par les points de rotation traversants A1, B1, C1 ainsi que E1, F1 ou A2 , B2, C2 ainsi que E2, F2, plans dans lesquels l'actionneur de levage (16) et l'actionneur de rabattement (17) agissent quant aux forces exercées par ceux-ci sur ou dans les structures portantes (12, 14) respectives, **caractérisé en ce qu'**un point de rotation D1, située dans la première structure portante (12), et un point de rotation D2, situés dans la deuxième structure (14), de l'actionneur de rabattement (17) respectif prévu et fixé à rotation au véhicule (11) se trouvent dans le plan respectif (18, 19), l'actionneur de rabattement (17) formant une partie de la première et/ou de la deuxième structure portante (12 ; 14) en forme de parallélogramme et étant fixé à rotation, à sa première extrémité (170), au véhicule (11) et étant fixé, à sa deuxième extrémité (171), au hayon de chargement (15) de manière rotative sur un axe de rotation (172) sensiblement orthogonal à l'axe longitudinal (173) de l'actionneur de rabattement (17) .

2. Système de hayon de chargement selon la revendication 1, **caractérisé en ce que** la première structure portante (12) et/ou la deuxième structure portante (14) comprennent un bras porteur unique (120, 140) qui est fixé à rotation au véhicule (11) par le biais d'un premier axe de rotation (121, 141), et est fixé à rotation au hayon de chargement (15) par le biais d'un deuxième axe de rotation (122 ; 142) qui est disposé à l'extrémité opposée du bras porteur unique (120 ; 140) et qui s'étend sensiblement orthogonalement au premier bras porteur (120 ; 140) et sensiblement parallèlement au premier axe de rotation (121 ; 141).

3. Système de hayon porteur selon la revendication 1, **caractérisé en ce que** la première structure porteuse (12) et/ou la deuxième structure porteuse (14) comprennent deux premiers bras porteurs (120, 120' ; 140, 140') qui sont espacés l'un de l'autre de manière sensiblement parallèle et qui sont fixés à rotation au véhicule (11) par le biais d'un premier axe de rotation (122) et sont fixés à rotation au hayon de chargement (15) par le biais d'un deuxième axe de rotation (122 ; 142) qui est disposé à l'extrémité opposée des deux bras porteurs (120, 120' ; 140, 140') et qui s'étend sensiblement orthogonalement au premier bras porteur (120 ; 120') et sensiblement parallèlement au premier axe de rotation (121 ; 141).

4. Système de hayon de chargement selon l'une des revendications 1 et 2 ou les deux, **caractérisé en ce que** l'actionneur de levage (16) est fixé à rotation, à sa première extrémité (160), au véhicule (11) et est fixé à rotation, à deuxième extrémité (161), au bras porteur unique (120 ; 140).

5. Système de hayon de chargement selon l'une des revendications 1 et 3 ou les deux, **caractérisé en ce que** l'actionneur de levage (16) est fixé à rotation, à sa première extrémité (160), au véhicule (11) et est fixé à rotation, à sa deuxième extrémité (161), aux deux premiers bras porteurs (120, 120' ; 140, 140') espacés l'un de l'autre.

6. Système de hayon de chargement selon une ou plusieurs des revendications 1 à 5, **caractérisé en ce que** l'actionneur de levage (16) forme sensiblement une partie de la première et/ou de la deuxième structure porteuse (12 ; 14) en forme de parallélogramme.

7. Système de hayon de chargement selon une ou plusieurs des revendications 1 à 6, **caractérisé en ce que** les bras porteurs (120 ; 120, 120') de la première structure porteuse (12) et/ou les bras porteurs (140 ; 140, 140') de la deuxième structure porteuse (14) ont une forme tubulaire en coupe transversale.

8. Système de hayon de chargement selon une ou plusieurs des revendications 1 à 6, **caractérisé en ce que** les bras porteurs (120 ; 120, 120') de la première structure porteuse (12) et/ou les bras porteurs (140 ; 140, 140') de la deuxième structure porteuse (14) sont conçus comme des éléments en forme de plaque.

9. Système de hayon de chargement selon une ou plusieurs des revendications 1 à 8, **caractérisé en ce que** la fixation de la première et/ou de la deuxième structure porteuse (12 ; 14) au véhicule (11) est effectuée par le biais d'un élément de fixation séparé (20 ; 21) respectif.

10. Système de hayon de chargement selon la revendication 9, **caractérisé en ce que** l'élément de fixation (20 ; 21) a une structure en forme de plaque.

11. Système de hayon de chargement selon une ou plusieurs des revendications 1 à 10, **caractérisé en ce que** la fixation de la première et/ou de la deuxième structure porteuse (12 ; 14) au hayon de chargement (11) est effectuée par le biais d'un élément adaptateur séparé (22, 23) respectif.

12. Système de hayon de chargement selon une ou plusieurs des revendications 1 à 11, **caractérisé en ce que** la première et la deuxième structure porteuse (12, 14) sont reliées de manière rigide par le biais d'un élément de liaison (24).

13. Système de hayon de chargement selon la revendication 12, **caractérisé en ce que** l'élément de liaison (24) a une section transversale tubulaire et sert en outre de protection anti-encastrement contre des véhicules tiers.

14. Système de hayon de chargement selon l'une des revendications 12 et 13 ou les deux, **caractérisé en ce que** l'élément de liaison (24) est relié de manière amovible aux première et deuxième structures porteuses (12, 14) par le biais d'un élément de retenue (25, 26) respectif.

15. Système de hayon de chargement selon une ou plusieurs des revendications 1 à 14, **caractérisé en ce que** l'actionneur de levage (16) et/ou l'actionneur de rabattement (17) sont actionnés hydrauliquement.

16. Système de hayon de chargement selon une ou plusieurs des revendications 1 à 14, **caractérisé en ce que** l'actionneur de levage (16) et/ou l'actionneur de rabattement (17) sont actionnés pneumatiquement.

17. Système de hayon de chargement selon une ou plusieurs des revendications 1 à 14, **caractérisé en ce que** l'actionneur de levage (16) et/ou l'actionneur de rabattement (17) sont actionnés par un moteur électrique.
